# EUROPÄISCHE PATENTSCHRIFT

(11) **EP 3 083 032 B1**
(45) Veröffentlichungstag und Bekanntmachung des Hinweises auf die Patenterteilung: **05.08.2020**
(21) Anmeldenummer: 14821573.4
(22) Anmeldetag: 16.12.2014
(51) Int. Cl.: B01J 19/00

(54) **VERFAHREN ZUM BETREIBEN EINER MODULAR AUFGEBAUTEN PRODUKTIONSANLAGE**
METHOD FOR OPERATING A PRODUCTION PLANT OF MODULAR DESIGN
PROCÉDÉ D'EXPLOITATION D'UNE INSTALLATION DE PRODUCTION DE STRUCTURE MODULAIRE

(30) Priorität: 20.12.2013 DE 102013114720
(43) Veröffentlichungstag der Anmeldung: 26.10.2016
(73) Patentinhaber: Bayer Aktiengesellschaft, 51373 Leverkusen (DE)
(72) Erfinder: KÜPPER, Achim, 51375 Leverkusen (DE); OCHS, Stefan, 51063 Köln (DE)
(74) Vertreter: BIP Patents
(86) Internationale Anmeldenummer: PCT/EP2014/077953
(87) Internationale Veröffentlichungsnummer: WO 2015/091474

(56) Entgegenhaltungen:
- EP-A2- 1 932 828
- WO-A1-2014/072340
- DE-A1- 19 917 398
- US-A- 4 332 590
- US-A1- 2012 107 175

## Beschreibung

Die Arbeiten, die zu dieser Erfindung geführt haben, wurden gemäß der Finanzhilfevereinbarung Nr. 228867 im Zuge des Siebten Rahmenprogramms der Europäischen Union RP7/2007-2013 gefördert.

Die Erfindung betrifft ein Verfahren zum Betreiben einer produktionstechnisch miteinander verbundene, regelungstechnisch autarke Prozessmodule aufweisenden Produktionsanlage für die Produktion eines chemischen und/oder pharmazeutischen Produktes.

Des Weiteren betrifft die Erfindung eine Produktionsanlage für die Produktion eines chemischen und/oder pharmazeutischen Produktes.

Für die Herstellung eines bestimmten chemischen und/oder pharmazeutischen Produktes ist es erforderlich, eine Produktionsanlage mit individuell gestalteter Anlagenstruktur bereitzustellen, um die jeweilig verfahrenstechnisch erforderlichen Prozessschritte in einzelnen Prozessabschnitten durchführen zu können. Ist die Herstellung dieses bestimmten Produktes nicht mehr gewünscht, wird die Produktionsanlage üblicherweise wieder abgebaut, um an derselben Stelle eine andere Produktionsanlage mit individuell gestalteter Anlagenstruktur aufbauen zu können, mit der ein anderes chemisches und/oder pharmazeutisches Produkt hergestellt werden kann. Dieses Auf- und Abbauen von Produktionsanlagen ist sehr zeit- und kostenaufwändig. Es besteht daher ein ständiges Bedürfnis, den mit der Produktion verschiedener chemischer und/oder pharmazeutischer Produkte verbundenen Aufwand zu verringern.

Das Dokument EP 1 932 828 A2 beschreibt ein Verfahren zum Betreiben von einem Prozessmodul innerhalb einer Produktionsanlage sowie die entsprechende Produktionsanlage. Der Massenzulauf in das Prozessmodul beziehungsweise Massenablauf aus dem Prozessmodul wird erhöht oder erniedrigt, wenn die in diesem Prozessmodul vorhandene, von diesem Prozessmodul zu verarbeitende Materialmenge kleiner oder größer als einer Mengengrenzwert ist. Das Dokument US 4 332 590 A beschreibt ein ganz ähnliches Verfahren zum Betreiben von einem Prozessmodul innerhalb einer Produktionsanlage sowie auch hier die entsprechende Produktionsanlage.

Zur Umgehung dieser Problematik kann eine Produktionsanlage modular aus einzelnen prozesstechnisch miteinander verbindbaren, regelungstechnisch autarken Prozessmodulen aufgebaut werden. Solche Produktionsanlagen erfordern jedoch neuartige Regelungskonzepte, da bei herkömmlichen Produktionsanlagen eingesetzte Regelungskonzepte nicht ohne Weiteres auf modular aus regelungstechnisch autarken Prozessmodulen aufgebaute Produktionsanlagen übertragbar sind.

Aufgabe der Erfindung ist es, ein Regelungskonzept für eine produktionstechnisch miteinander verbundene, regelungstechnisch autarke Prozessmodule aufweisende Produktionsanlage für die Produktion eines chemischen und/oder pharmazeutischen Produktes bereitzustellen.

Diese Aufgabe wird durch ein Verfahren mit den Merkmalen gemäß Patentanspruch 1 und eine Produktionsanlage mit den Merkmalen gemäß Patentanspruch 6 gelöst. Bevorzugte Ausgestaltungen der Erfindung sind in den Unteransprüchen angegeben, die jeweils für sich genommen oder in beliebiger Kombination miteinander einen Aspekt der Erfindung darstellen können.

Mit Patentanspruch 1 wird ein Verfahren zum Betreiben einer produktionstechnisch miteinander verbundene, regelungstechnisch autarke Prozessmodule aufweisenden Produktionsanlage für die Produktion eines chemischen und/oder pharmazeutischen Produktes vorgeschlagen, wobei für jedes Prozessmodul kontinuierlich oder diskret eine jeweilig in diesem Prozessmodul vorhandene, von diesem Prozessmodul zu verarbeitende Materialmenge erfasst und mit einem vorgegebenen Mengengrenzwert verglichen wird, wobei
- ein Massenzulauf in das jeweilige Prozessmodul erhöht oder erniedrigt wird, wenn die jeweilig in diesem Prozessmodul vorhandene, von diesem Prozessmodul zu verarbeitende Materialmenge kleiner oder größer als der Mengengrenzwert ist, wobei der Massenzulauf gleichzeitig ein Massenablauf eines produktionstechnisch diesem Prozessmodul unmittelbar vorgeschalteten weiteren Prozessmoduls ist, oder
- ein Massenablauf aus dem jeweiligen Prozessmodul erhöht oder erniedrigt wird, wenn die jeweilig in diesem Prozessmodul vorhandene, von diesem Prozessmodul zu verarbeitende Materialmenge größer oder kleiner als der Mengengrenzwert ist, wobei der Massenablauf gleichzeitig ein Massenzulauf eines produktionstechnisch diesem Prozessmodul unmittelbar nachgeschalteten weiteren Prozessmoduls ist. Im Rahmen der Erfindung können die Begriffe "Mengengrenzwert" und "Mengensollwert" als gleichbedeutend verwendet werden.

Wird ein Massenzulauf in das jeweilige Prozessmodul erhöht, wenn die jeweilig in diesem Prozessmodul vorhandene, von diesem Prozessmodul zu verarbeitende Materialmenge kleiner als der Mengengrenzwert ist, wobei der Massenzulauf gleichzeitig ein Massenablauf eines produktionstechnisch diesem Prozessmodul unmittelbar vorgeschalteten weiteren Prozessmoduls ist, arbeitet die Produktionsanlage bzw. deren Prozessmodule nach einem aus der Fertigungstechnik bekannten Regelungskonzept, dem sogenannten Pull-Prinzip. Wird hingegen ein Massenablauf aus dem jeweiligen Prozessmodul erhöht, wenn die jeweilig in diesem Prozessmodul vorhandene, von diesem Prozessmodul zu verarbeitende Materialmenge größer als der Mengengrenzwert ist, wobei der Massenablauf gleichzeitig ein Massenzulauf eines produktionstechnisch diesem Prozessmodul unmittelbar nachgeschalteten weiteren Prozessmoduls ist, arbeitet die Produktionsanlage bzw. deren Prozessmodule nach einem ebenfalls aus der Fertigungstechnik bekannten Regelungskonzept, dem sogenannten Push-Prinzip. Beim Pull-Prinzip geht folglich der Impuls zur Aktivität von einem jeweilig einem Prozessmodul nachgeschalteten Prozessmodul aus, wohingegen beim Push-Prinzip der Impuls der Aktivität von einem jeweilig einem Prozessmodul vorgeschalteten Prozessmodul ausgeht. Wesentlich ist für die Erfindung, dass alle Prozessmodule einer Produktionsanlage einheitlich nach dem Pull-Prinzip oder dem Push-Prinzip arbeiten. Würden nicht alle Prozessmodule einer Produktionsanlage einheitlich nach dem Pull-Prinzip oder dem Push-Prinzip arbeiten, würden diese Prozessmodule gegeneinander arbeiten. Auch ist es nicht sinnvoll, einen Ablauf eines vorgeschalteten Prozessmoduls unabhängig von einem Zulauf eines dem vorgeschalteten Prozessmodul nachgeschalteten Prozessmoduls zu regeln.

Die produktionstechnisch miteinander verbindbaren, regelungstechnisch autarken Prozessmodule können als als Ganzes transportierbare Einheiten ausgebildet sein, welche zu einem gewünschten Produktionsort, an dem eine entsprechend ausgestattete, modular aufgebaute Produktionsanlage aufgestellt werden soll, transportierbar bzw. von diesem Ort nach Abschluss der gewünschten Produktion weg transportierbar sind. Dies ermöglicht eine einfache und produktionskostenreduzierende Wiederverwendung einzelner Prozessmodule an verschiedenen Produktionsorten. Hierzu kann ein Prozessmodul ein einen einfachen Transport des Prozessmoduls ermöglichendes Gehäuse aufweisen, in dem zur Durchführung des gewünschten Prozessabschnitts wenigstens ein Prozessaggregat angeordnet und dessen Dimensionierung standardisiert sein kann.

An einem Produktionsort können die Prozessmodule, vorzugsweise über standardisierte Kupplungen, an ein fest installiertes Kommunikationsnetz und an ein Versorgungsnetz angeschlossen werden, mit dem die Prozessmodule mit Stoff und/oder Energie versorgt und/oder in das Stoffe abgegeben werden können, so dass mittels der Prozessmodule im Wesentlichen autark wenigstens eine chemische Batch-Reaktion und/oder eine kontinuierliche Produktion durchgeführt werden kann. Über das Versorgungsnetz können insbesondere feste, flüssig und/oder gasförmige Stoffe oder Stoffgemische transportiert werden, die einphasig oder mehrphasig, beispielsweise als Suspension oder Emulsion, vorliegen können. Beispielsweise kann das Versorgungsnetz eine Druckluftleitung zur Zufuhr von Druckluft, eine Speisewasserleitung zur Zufuhr von Wasser, eine Elektroleitung zur Zufuhr von elektrischer Energie, eine Stoffleitung zur Zufuhr von Edukten und/oder Hilfsstoffen und/oder zur Abfuhr von Produkten, Nebenprodukten und/oder Abfallstoffen, eine Kühlleitung zur Zufuhr von Kälte beziehungsweise zur Abfuhr von Wärme und/oder eine Heizleitung zur Zufuhr von Wärme beziehungsweise zur Abfuhr von Kälte aufweisen. Als Kommunikationsnetz kommen verschiedene kabelgebundene oder kabellose Kommunikationsnetze in Betracht. Über das Kommunikationsnetz kann ein standardisierter Informationsaustausch der an das Kommunikationsnetz angeschlossenen Prozessmodule untereinander erfolgen.

Zusätzlich oder alternativ können innerhalb des Gehäuses eines Prozessmoduls ein an das Versorgungsnetz anschließbarer Speicher für Stoff und/oder Energie, und/oder ein Vorratsbehälter für flüssige, feste und/oder gasförmige Stoffe, vorgesehen sein, so dass chemische Reaktionen autark und unabhängig von einer externen Versorgung erfolgen können. Die Prozessmodule können beispielsweise Funktionalitäten zum Heizen, Kühlen, Vermischen, Trennen, Druckregeln, Belüften und/oder Entlüften aufweisen, die es ermöglichen eine chemische Reaktion durchzuführen und Reaktionsbedingungen zu regeln.

Gemäß einer vorteilhaften Ausgestaltung wird zur Erfassung der jeweilig in wenigstens einem der Prozessmodule vorhandenen, von diesem Prozessmodul zu verarbeitenden Materialmenge ein Füllstand in diesem Prozessmodul erfasst. Dies stellt eine einfache Möglichkeit zur Erfassung der jeweilig in einem Prozessmodul vorhandenen, von dem Prozessmodul zu verarbeitenden Materialmenge über geeignete Füllstandssensoren dar. Es kann auch in jedem Prozessmodul eine Erfassung der in dem Prozessmodule vorhandenen, von diesem Prozessmodul zu verarbeitenden Materialmenge über eine Erfassung des Füllstands in dem Prozessmodul erfolgen.

Nach einer weiteren vorteilhaften Ausgestaltung wird zur Erfassung der jeweilig in wenigstens einem der Prozessmodule vorhandenen, von diesem Prozessmodul zu verarbeitenden Materialmenge ein Druck in diesem Prozessmodul erfasst. Dies kann alternativ oder zum Erhalt redundanter Informationen zusätzlich zu der zuletzt genannten Ausgestaltung vorgesehen sein. Auch diese Ausgestaltung stellt eine einfache Möglichkeit zur Erfassung der jeweilig in einem Prozessmodul vorhandenen, von dem Prozessmodul zu verarbeitenden Materialmenge über geeignete Drucksensoren dar. Es kann auch in jedem Prozessmodul eine Erfassung der in dem Prozessmodule vorhandenen, von diesem Prozessmodul zu verarbeitenden Materialmenge über eine Erfassung des Drucks in dem Prozessmodul erfolgen.

Mit Patentanspruch 6 wird eine Produktionsanlage für die Produktion eines chemischen und/oder pharmazeutischen Produktes vorgeschlagen, aufweisend wenigstens zwei produktionstechnisch miteinander verbindbare, regelungstechnisch autarke Prozessmodule, wobei jedes Prozessmodul eine eigene elektronische Einrichtung, insbesondere Steuer- und/oder Regeleinrichtung, aufweist, die eingerichtet ist, kontinuierlich oder diskret eine jeweilig in dem jeweiligen Prozessmodul vorhandene, von diesem Prozessmodul zu verarbeitende Materialmenge zu erfassen und mit einem vorgegebenen Mengengrenzwert zu vergleichen, wobei jede elektronische Einrichtung des Weiteren eingerichtet ist,
- einen Zulauf des jeweiligen Prozessmoduls zur Erhöhung oder Erniedrigung eines Massenzulaufs in dieses Prozessmodul zu betätigen, wenn die jeweilig in diesem Prozessmodul vorhandene, von diesem Prozessmodul zu verarbeitende Materialmenge kleiner oder größer als der Mengengrenzwert ist, wobei der Zulauf gleichzeitig ein Ablauf eines produktionstechnisch diesem Prozessmodul unmittelbar vorgeschalteten weiteren Prozessmoduls ist, oder
- einen Ablauf des jeweiligen Prozessmoduls zur Erhöhung oder Erniedrigung eines Massenablaufs aus diesem Prozessmodul zu betätigen, wenn die jeweilig in diesem Prozessmodul vorhandene, von diesem Prozessmodul zu verarbeitende Materialmenge größer oder kleiner als der Mengengrenzwert ist, wobei der Ablauf gleichzeitig ein Zulauf eines produktionstechnisch diesem Prozessmodul unmittelbar nachgeschalteten weiteren Prozessmoduls ist.

Mit dieser Produktionsanlage sind die oben mit Bezug auf das Verfahren genannten Vorteile und Ausführungsformen entsprechend verbunden.

Einzelne Prozessmodule können zwischen von dem Pull-Prinzip auf das Push-Prinzip, oder umgekehrt, umgestellt werden. Alternativ ist es möglich, dass sich einzelne in eine entsprechende Produktionsanlage integrierte Prozessmodule automatisch und selbsttätig umstellen. Dies kann zusätzlich eine Neuauslegung der sonstigen Regelung eines Prozessmoduls erforderlich machen, wie beispielsweise der Regelung interner Puffernetzwerke eines Prozessmoduls.

Jede elektronische Einrichtung eines Prozessmoduls kann kommunikationstechnisch mit dem oben genannten Kommunikationsnetz verbindbar sein. Vorzugsweise erfasst die elektronische Einrichtung, wenn eine Verbindung des jeweiligen Prozessmoduls mit dem Kommunikationsnetz erfolgt, woraufhin von der elektronischen Einrichtung automatisch ein Identifikationssignal in das Kommunikationsnetz eingespeist wird, aus dem beispielsweise die Gattung des Prozessmoduls hervorgeht.

Jede elektronische Einrichtung kann eingerichtet sein, das jeweilige Prozessmodul zur eigenständigen Durchführung eines bestimmten Prozessabschnitts der Produktion zu steuern und/oder zu regeln. Eigenständig bedeutet hierbei, dass der Prozessabschnitt mittels des Prozessmoduls durchgeführt wird, ohne dass hierzu eine Steuerung und/oder Regelung des Prozessabschnitts oder eines Teils davon von einer Einrichtung abseits des Prozessmoduls erfolgen muss. Das Prozessmodul kann hiernach also autark arbeiten.

Die elektronischen Einrichtungen können des Weiteren derart eingerichtet sein, dass kommunikationstechnisch mit dem Kommunikationsnetz verbundene Prozessmodule automatisch miteinander kommunizieren können, beispielsweise derart, dass wenigstens ein Prozessmodul automatisch Informationen von zumindest einem weiteren Prozessmodul abfragt. Diese automatische Kommunikation der Prozessmodule untereinander ist insbesondere möglich, wenn Prozessmodule, die an das Kommunikationsnetz angeschlossen werden, mittels ihrer jeweiligen elektronischen Einrichtung ein Identifikationssignal in das Kommunikationsnetz ausgeben, welches von bereits mit dem Kommunikationsnetz verbundenen Prozessmodulen empfangen wird. Den empfangenden Prozessmodulen kann hierdurch die Adresse des neu an das Kommunikationsnetz angeschlossenen Prozessmoduls mitgeteilt werden. Dies kann beispielsweise bei den bereits mit dem Kommunikationsnetz verbundenen Prozessmodulen bzw. deren elektronischen Einrichtungen ein Auslöser sein, dass auch diese Prozessmodule ein entsprechendes Identifikationssignal in das Kommunikationsnetz abgeben, welches wiederum von dem neu an das Kommunikationsnetz angeschlossenen Prozessmodul empfangen wird. Die Produktionsanlage kann diesbezüglich eine Plug and Play-Funktionalität aufweisen.

Die von den weiteren Prozessmodulen abfragbaren Informationen können Informationen in Form von gegebenen und/oder zu erwartenden Prozessparametern bezüglich des von dem diese Informationen zur Verfügung stellenden Prozessmodul durchgeführten bzw. durchzuführenden Prozessabschnitts umfassen. Diese Prozessparameter können dann zur Steuerung und/oder Regelung eines abfragenden Prozessmoduls verwendet werden. Insbesondere ist dies für ein nachfolgendes Prozessmodul vorteilhaft, welches zur Weiterverarbeitung eines von einem vorhergehenden Prozessmodul in einem zeitlich vorhergehenden Prozessabschnitt hergestellten Zwischenproduktes vorgesehen ist. Für diese Weiterverarbeitung durch das nachfolgende Prozessmodul ist es von erheblicher Bedeutung, welche Eigenschaften das von dem vorhergehenden Prozessmodul hergestellte Zwischenprodukt aufweist, um ermitteln zu können, welche Randbedingungen zur Herstellung des gewünschten Endproduktes aus dem Zwischenprodukt vorliegen bzw. von dem nachfolgenden Prozessmodul eingehalten werden müssen.

Gemäß einer vorteilhaften Ausgestaltung weist wenigstens ein Prozessmodul zumindest einen den Materialfüllstand in diesem Prozessmodul erfassenden, kommunikationstechnisch mit der elektronischen Einrichtung dieses Prozessmoduls verbundenen Füllstandssensor auf, wobei die elektronische Einrichtung eingerichtet ist, aus dem jeweilig über den Füllstandssensor erfassten Materialfüllstand die jeweilig in dem Prozessmodul vorhandene, von dem Prozessmodul zu verarbeitenden Materialmenge zu ermitteln. Hiermit sind die oben mit Bezug auf die entsprechende Ausgestaltung des Verfahrens genannten Vorteile und Ausführungsformen entsprechend verbunden.

Nach einer weiteren vorteilhaften Ausgestaltung weist wenigstens ein Prozessmodul zumindest einen den Druck in diesem Prozessmodul erfassenden, kommunikationstechnisch mit der elektronischen Einrichtung dieses Prozessmoduls verbundenen Drucksensor auf, wobei die elektronische Einrichtung eingerichtet ist, aus dem jeweilig über den Drucksensor erfassten Druck die jeweilig in dem Prozessmodul vorhandene, von dem Prozessmodul zu verarbeitenden Materialmenge zu ermitteln. Auch hiermit sind die oben mit Bezug auf die entsprechende Ausgestaltung des Verfahrens genannten Vorteile und Ausführungsformen entsprechend verbunden.

Eine weitere vorteilhafte Ausgestaltung sieht vor, dass an jeder einen Ablauf für ein vorgeschaltetes Prozessmodul und gleichzeitig einen Zulauf für ein diesem Prozessmodul nachgeschaltetes Prozessmodul bildenden Leitung wenigstens ein elektrisch ansteuerbares, kommunikationstechnisch mit der elektronischen Einrichtung des vorgeschalteten Prozessmoduls oder des nachgeschalteten Prozessmoduls verbundenes Ventil angeordnet ist. Hierdurch kann ein Materialablauf bzw. ein Materialzulauf aus bzw. in ein Prozessmodul auf einfache Art und Weise geregelt werden.

Nachfolgend wird die Erfindung unter Bezugnahme auf die anliegenden Figuren anhand von bevorzugten Ausführungsbeispielen exemplarisch erläutert, wobei die nachfolgend dargestellten Merkmale sowohl jeweils für sich genommen als auch in Kombination miteinander einen Aspekt der Erfindung darstellen können. Es zeigen
Figur 1:eine schematische Darstellung eines Ausführungsbeispiels für eine erfindungsgemäße Produktionsanlage und
Figur 2:eine schematische Darstellung eines weiteren Ausführungsbeispiels für eine erfindungsgemäße Produktionsanlage.

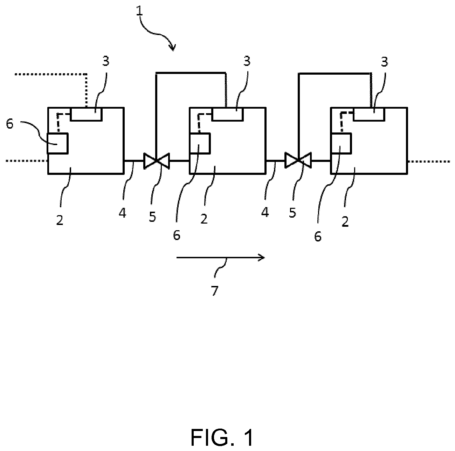

In Figur 1 ist ein Ausführungsbeispiel für eine erfindungsgemäße Produktionsanlage 1 für die Produktion eines chemischen und/oder pharmazeutischen Produktes. Der Materialfluss ist durch den Pfeil 7 angedeutet. Die Produktionsanlage 1 umfasst n produktionstechnisch miteinander verbundene, regelungstechnisch autarke Prozessmodule 2 auf. Jedes Prozessmodul 2 weist eine elektronische Einrichtung 3, insbesondere Steuer- und/oder Regeleinrichtung, auf, die eingerichtet ist, kontinuierlich oder diskret eine jeweilig in dem jeweiligen Prozessmodul 2 vorhandene, von diesem Prozessmodul 2 zu verarbeitende Materialmenge zu erfassen und mit einem vorgegebenen Mengengrenzwert zu vergleichen. Jede elektronische Einrichtung 3 ist des Weiteren eingerichtet, einen Zulauf des jeweiligen Prozessmoduls 2 zur Erhöhung eines Massenzulaufs in dieses Prozessmodul 2 zu betätigen, wenn die jeweilig in diesem Prozessmodul 2 vorhandene, von diesem Prozessmodul 2 zu verarbeitende Materialmenge kleiner als der Mengengrenzwert ist, wobei der Zulauf gleichzeitig ein Ablauf eines produktionstechnisch diesem Prozessmodul 2 unmittelbar vorgeschalteten weiteren Prozessmoduls 2 ist. Die Produktionsanlage 1 bzw. deren Prozessmodule 3 arbeiten somit nach dem Pull-Prinzip. Um den jeweiligen Zulauf entsprechend erhöhen zu können, ist an jeder einen Ablauf für ein vorgeschaltetes Prozessmodul 2 und gleichzeitig einen Zulauf für ein diesem Prozessmodul 2 nachgeschaltetes Prozessmodul 2 bildenden Leitung 4 ein elektrisch ansteuerbares, kommunikationstechnisch mit der elektronischen Einrichtung 3 des nachgeschalteten Prozessmoduls 2 verbundenes Ventil 5 angeordnet.

Jedes Prozessmodul 2 umfasst des Weiteren einen den Materialfüllstand in diesem Prozessmodul 2 erfassenden, kommunikationstechnisch mit der elektronischen Einrichtung 3 dieses Prozessmoduls 2 verbundenen Füllstandssensor 6, wobei die elektronische Einrichtung 3 eingerichtet ist, aus dem jeweilig über den Füllstandssensor 6 erfassten Materialfüllstand die jeweilig in dem Prozessmodul 2 vorhandene, von dem Prozessmodul 2 zu verarbeitenden Materialmenge zu ermitteln. Alternativ oder zusätzlich kann jedes Prozessmodul 2 einen den Druck in diesem Prozessmodul 2 erfassenden, kommunikationstechnisch mit der elektronischen Einrichtung 3 dieses Prozessmoduls 2 verbundenen, nicht dargestellten Drucksensor aufweisen, wobei die elektronische Einrichtung 3 eingerichtet ist, aus dem jeweilig über den Drucksensor erfassten Druck die jeweilig in dem Prozessmodul 2 vorhandene, von dem Prozessmodul 2 zu verarbeitenden Materialmenge zu ermitteln. Hierzu kann jede elektronische Einrichtung 3 einen Mikroprozessor und ein geeignetes Speichermedium aufweisen.

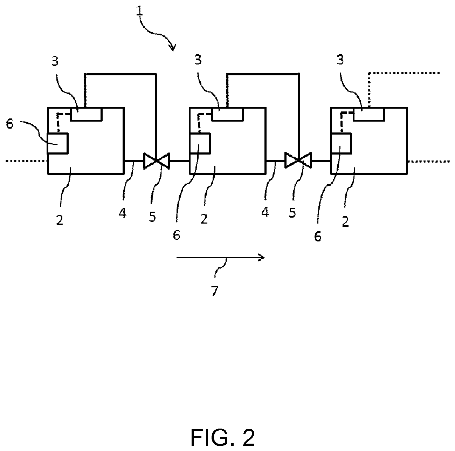

Figur 2 zeigt eine schematische Darstellung eines weiteren Ausführungsbeispiels für eine erfindungsgemäße Produktionsanlage 1. Diese Produktionsanlage 1 unterscheidet sich von dem in Figur 1 gezeigten Ausführungsbeispiel insbesondere dadurch, dass jede elektronische Einrichtung 3 eingerichtet ist, einen Ablauf des jeweiligen Prozessmoduls 2 zur Erhöhung eines Massenablaufs aus diesem Prozessmodul 2 zu betätigen, wenn die jeweilig in diesem Prozessmodul 2 vorhandene, von diesem Prozessmodul 2 zu verarbeitende Materialmenge größer als der Mengengrenzwert ist, wobei der Ablauf gleichzeitig ein Zulauf eines produktionstechnisch diesem Prozessmodul 2 unmittelbar nachgeschalteten weiteren Prozessmoduls 2 ist. An jeder einen Ablauf für ein vorgeschaltetes Prozessmodul 2 und gleichzeitig einen Zulauf für ein diesem Prozessmodul 2 nachgeschaltetes Prozessmodul 2 bildenden Leitung 4 ist ein elektrisch ansteuerbares, kommunikationstechnisch mit der elektronischen Einrichtung 3 des vorgeschalteten Prozessmoduls 2 verbundenes Ventil 5 angeordnet.

## Patentansprüche

1. Verfahren zum Betreiben einer produktionstechnisch miteinander verbundene, regelungstechnisch autarke Prozessmodule (2) aufweisenden Produktionsanlage (1) für die Produktion eines chemischen und/oder pharmazeutischen Produktes, wobei für jedes Prozessmodul (2) kontinuierlich oder diskret eine jeweilig in diesem Prozessmodul (2) vorhandene, von diesem Prozessmodul (2) zu verarbeitende Materialmenge erfasst und mit einem vorgegebenen Mengengrenzwert verglichen wird, wobei
- ein Massenzulauf in das jeweilige Prozessmodul (2) erhöht wird, wenn die jeweilig in diesem Prozessmodul (2) vorhandene, von diesem Prozessmodul (2) zu verarbeitende Materialmenge kleiner als der Mengengrenzwert ist, wobei der Massenzulauf gleichzeitig ein Massenablauf eines produktionstechnisch diesem Prozessmodul (2) unmittelbar vorgeschalteten weiteren Prozessmoduls (2) ist, sodass alle Prozessmodule (2) der Produktionsanlage (1) einheitlich nach dem Pull-Prinzip arbeiten, oder
- ein Massenablauf aus dem jeweiligen Prozessmodul (2) erhöht wird, wenn die jeweilig in diesem Prozessmodul (2) vorhandene, von diesem Prozessmodul (2) zu verarbeitende Materialmenge größer als der Mengengrenzwert ist, wobei der Massenablauf gleichzeitig ein Massenzulauf eines produktionstechnisch diesem Prozessmodul (2) unmittelbar nachgeschalteten weiteren Prozessmoduls (2) ist, sodass alle Prozessmodule (2) der Produktionsanlage (1) einheitlich nach dem Push-Prinzip arbeiten.

2. Verfahren nach Anspruch 1, **dadurch gekennzeichnet, dass** die produktionstechnisch miteinander verbindbaren, regelungstechnisch autarken Prozessmodule (2) als als Ganzes transportierbare Einheiten ausgebildet sind, welche zu einem gewünschten Produktionsort, an dem eine entsprechend ausgestattete, modular aufgebaute Produktionsanlage (1) aufgestellt werden soll, transportierbarund von diesem Ort nach Abschluss der gewünschten Produktion weg transportierbar sind.

3. Verfahren nach Anspruch 2, **dadurch gekennzeichnet, dass** die Prozessmodule (2) an dem Produktionsort, vorzugsweise über standardisierte Kupplungen, an ein fest installiertes Kommunikationsnetz und an ein Versorgungsnetz angeschlossen werden können, mit dem die Prozessmodule (2) mit Stoff und/oder Energie versorgt und/oder in das Stoffe abgegeben werden können, so dass mittels der Prozessmodule (2) im Wesentlichen autark wenigstens eine chemische Batch-Reaktion und/oder eine kontinuierliche Produktion durchgeführt werden kann.

4. Verfahren nach einem der vorhergehenden Ansprüche, **dadurch gekennzeichnet, dass** zur Erfassung der jeweilig in wenigstens einem der Prozessmodule (2) vorhandenen, von diesem Prozessmodul (2) zu verarbeitenden Materialmenge ein Füllstand in diesem Prozessmodul (2) erfasst wird.

5. Verfahren nach einem der vorhergehenden Ansprüche, **dadurch gekennzeichnet, dass** zur Erfassung der jeweilig in wenigstens einem der Prozessmodule (2) vorhandenen, von diesem Prozessmodul (2) zu verarbeitenden Materialmenge ein Druck in diesem Prozessmodul (2) erfasst wird.

6. Produktionsanlage (1) für die Produktion eines chemischen und/oder pharmazeutischen Produktes, aufweisend wenigstens zwei produktionstechnisch miteinander verbindbare, regelungstechnisch autarke Prozessmodule (2), wobei jedes Prozessmodul (2) eine elektronische Einrichtung (3), insbesondere Steuer- und/oder Regeleinrichtung, aufweist, die eingerichtet ist, kontinuierlich oder diskret eine jeweilig in dem jeweiligen Prozessmodul (2) vorhandene, von diesem Prozessmodul (2) zu verarbeitende Materialmenge zu erfassen und mit einem vorgegebenen Mengengrenzwert zu vergleichen, wobei jede elektronische Einrichtung (3) des Weiteren eingerichtet ist,
- einen Zulauf des jeweiligen Prozessmoduls (2) zur Erhöhung eines Massenzulaufs in dieses Prozessmodul (2) zu betätigen, wenn die jeweilig in diesem Prozessmodul (2) vorhandene, von diesem Prozessmodul (2) zu verarbeitende Materialmenge kleiner als der Mengengrenzwert ist, wobei der Zulauf gleichzeitig ein Ablauf eines produktionstechnisch diesem Prozessmodul (2) unmittelbar vorgeschalteten weiteren Prozessmoduls (2) ist, sodass alle Prozessmodule (2) der Produktionsanlage (1) einheitlich nach dem Pull-Prinzip arbeiten, oder
- einen Ablauf des jeweiligen Prozessmoduls (2) zur Erhöhung eines Massenablaufs aus diesem Prozessmodul (2) zu betätigen, wenn die jeweilig in diesem Prozessmodul (2) vorhandene, von diesem Prozessmodul (2) zu verarbeitende Materialmenge größer als der Mengengrenzwert ist, wobei der Ablauf gleichzeitig ein Zulauf eines produktionstechnisch diesem Prozessmodul (2) unmittelbar nachgeschalteten weiteren Prozessmoduls (2) ist, sodass alle Prozessmodule (2) der Produktionsanlage (1) einheitlich nach dem Push-Prinzip arbeiten.

7. Produktionsanlage (1) nach Anspruch 6, **dadurch gekennzeichnet, dass** wenigstens ein Prozessmodul (2) zumindest einen den Materialfüllstand in diesem Prozessmodul (2) erfassenden, kommunikationstechnisch mit der elektronischen Einrichtung (3) dieses Prozessmoduls (2) verbundenen Füllstandssensor (6) aufweist, wobei die elektronische Einrichtung (3) eingerichtet ist, aus dem jeweilig über den Füllstandssensor (6) erfassten Materialfüllstand die jeweilig in dem Prozessmodul (2) vorhandene, von dem Prozessmodul (2) zu verarbeitenden Materialmenge zu ermitteln.

8. Produktionsanlage (1) nach Anspruch 6 oder 7, **dadurch gekennzeichnet, dass** wenigstens ein Prozessmodul (2) zumindest einen den Druck in diesem Prozessmodul (2) erfassenden, kommunikationstechnisch mit der elektronischen Einrichtung (3) dieses Prozessmoduls (2) verbundenen Drucksensor aufweist, wobei die elektronische Einrichtung (3) eingerichtet ist, aus dem jeweilig über den Drucksensor erfassten Druck die jeweilig in dem Prozessmodul (2) vorhandene, von dem Prozessmodul (2) zu verarbeitenden Materialmenge zu ermitteln.

9. Produktionsanlage (1) nach einem der Ansprüche 6 bis 8, **dadurch gekennzeichnet, dass** an jeder einen Ablauf für ein vorgeschaltetes Prozessmodul (2) und gleichzeitig einen Zulauf für ein diesem Prozessmodul (2) nachgeschaltetes Prozessmodul (2) bildenden Leitung (4) wenigstens ein elektrisch ansteuerbares, kommunikationstechnisch mit der elektronischen Einrichtung (3) des vorgeschalteten Prozessmoduls (2) oder des nachgeschalteten Prozessmoduls (2) verbundenes Ventil (6) angeordnet ist.

## Claims

1. Method for operating a production plant (1) for producing a chemical and/or pharmaceutical product, having process modules (2) which are connected to one another for production purposes and are autonomous for regulating purposes, wherein for each process module (2) an amount of material that is respectively present in this process module (2) and is to be processed by this process module (2) is continuously or discretely detected and compared with a prescribed limit value for the amount, wherein
- a mass inflow into the respective process module (2) is increased if the amount of material that is respectively present in this process module (2) and is to be processed by this process module (2) is less than the limit value for the amount, the mass inflow at the same time being a mass outflow of a further process module (2) connected directly upstream of this process module (2) for production purposes, with the result that all process modules (2) of the production plant (1) consistently operate according to the pull principle, or
- a mass outflow from the respective process module (2) is increased if the amount of material that is respectively present in this process module (2) and is to be processed by this process module (2) is greater than the limit value for the amount, the mass outflow at the same time being a mass inflow of a further process module (2) connected directly downstream of this process module (2) for production purposes, with the result that all process modules (2) of the production plant (1) consistently operate according to the push principle.

2. Method according to Claim 1, **characterized in that** the process modules (2) which can be connected to one another for production purposes and are autonomous for regulating purposes are in the form of units which can be transported as a whole and can be transported to a desired production location, at which an accordingly equipped production plant (1) of modular construction is intended to be erected, and can be transported away from this location after the desired production has been concluded.

3. Method according to Claim 2, **characterized in that** the process modules (2) at the production location can be connected, preferably using standardized couplings, to a permanently installed communication network and to a supply network, with which the process modules (2) can be supplied with material and/or energy and/or into which materials can be discharged, with the result that at least a chemical batch reaction and/or continuous production can be carried out in a substantially autonomous manner by means of the process modules (2).

4. Method according to one of the preceding claims, **characterized in that**, for detecting the amount of material that is respectively present in at least one of the process modules (2) and is to be processed by this process module (2), a filling level in this process module (2) is detected.

5. Method according to one of the preceding claims, **characterized in that**, for detecting the amount of material that is respectively present in at least one of the process modules (2) and is to be processed by this process module (2), a pressure in this process module (2) is detected.

6. Production plant (1) for producing a chemical and/or pharmaceutical product, having at least two process modules (2) which can be connected to one another for production purposes and are autonomous for regulating purposes, wherein each process module (2) has an electronic device (3), in particular a control and/or regulating device, which is set up to detect continuously or discretely an amount of material that is respectively present in the respective process module (2) and is to be processed by this process module (2) and compare it with a prescribed limit value for the amount, wherein each electronic device (3) is also set up
- to actuate an inflow of the respective process module (2) to increase a mass inflow into this process module (2) if the amount of material that is respectively present in this process module (2) and is to be processed by this process module (2) is less than the limit value for the amount, the inflow at the same time being an outflow of a further process module (2) connected directly upstream of this process module (2) for production purposes, with the result that all process modules (2) of the production plant (1) consistently operate according to the pull principle, or
- to actuate an outflow of the respective process module (2) to increase a mass outflow from this process module (2) if the amount of material that is respectively present in this process module (2) and is to be processed by this process module (2) is greater than the limit value for the amount, the outflow at the same time being an inflow of a further process module (2) connected directly downstream of this process module (2) for production purposes, with the result that all process modules (2) of the production plant (1) consistently operate according to the push principle.

7. Production plant (1) according to Claim 6, **characterized in that** at least one process module (2) has at least one filling level sensor (6) detecting the filling level of the material in this process module (2) and connected for communication purposes to the electronic device (3) of this process module (2), the electronic device (3) being set up to determine, from the filling level of material respectively detected by means of the filling level sensor (6), the amount of material that is respectively present in the process module (2) and is to be processed by the process module (2).

8. Production plant (1) according to Claim 6 or 7, **characterized in that** at least one process module (2) has at least one pressure sensor detecting the pressure in this process module (2) and connected for communication purposes to the electronic device (3) of this process module (2), the electronic device (3) being set up to determine, from the pressure respectively detected by means of the pressure sensor, the amount of material that is respectively present in the process module (2) and is to be processed by the process module (2).

9. Production plant (1) according to one of Claims 6 to 8, **characterized in that** on each line (4) forming an outflow for an upstream process module (2) and at the same time an inflow for a process module (2) connected downstream of this process module (2) there is arranged at least one electrically activatable valve (6) connected for communication purposes to the electronic device (3) of the upstream process module (2) or of the downstream process module (2).

## Revendications

1. Procédé d'exploitation d'une installation de production (1) destinée à la production d'un produit chimique et/ou pharmaceutique, présentant des modules de processus (2) autonomes en termes de technique de régulation, reliés les uns aux autres en termes de technique de production, dans lequel, pour chaque module de processus (2), une quantité de matériau respectivement présente dans ce module de processus (2), à traiter par ce module de processus (2), est détectée en continu ou séparément et est comparée à une valeur seuil de quantité prédéfinie, dans lequel
- un apport de masse dans le module de processus (2) respectif est augmenté lorsque la quantité de matériau respectivement présente dans ce module de processus (2), à traiter par ce module de processus (2), est inférieure à la valeur seuil de quantité, l'apport de masse étant en même temps une évacuation de masse d'un autre module de processus (2), placé immédiatement en amont de ce module de processus (2) en termes de technique de production, de sorte que tous les modules de processus (2) de l'installation de production (1) fonctionnent de manière homogène selon le principe pull, ou
- une évacuation de masse du module de processus (2) respectif est augmentée lorsque la quantité de matériau respectivement présente dans ce module de processus (2), à traiter par ce module de processus (2), est supérieure à la valeur seuil de quantité, l'évacuation de masse étant en même temps un apport de masse d'un autre module de processus (2), placé immédiatement en aval de ce module de processus (2) en termes de technique de production, de sorte que tous les modules de processus (2) de l'installation de production (1) fonctionnent de manière homogène selon le principe push.

2. Procédé selon la revendication 1, **caractérisé en ce que** les modules de processus (2) autonomes en termes de technique de régulation, pouvant être reliés les uns aux autres en termes de technique de production, sont réalisés sous forme d'unités transportables dans leur ensemble, qui peuvent être transportées jusqu'à un lieu de production souhaité où une installation de production (1) de structure modulaire, équipée de manière correspondante, doit être mise en place, et qui peuvent être évacuées de ce lieu au terme de la production souhaitée.

3. Procédé selon la revendication 2, **caractérisé en ce que** sur le lieu de production, les modules de processus (2) peuvent être connectés, de préférence par l'intermédiaire d'accouplements standardisés, à un réseau de communication installé à demeure et à un réseau d'alimentation qui alimente les modules de processus (2) en substances et/ou en énergie et/ou qui peut recevoir des substances de sorte qu'au moins une réaction chimique discontinue et/ou une production continue puissent être effectuées au moyen des modules de processus (2) de manière substantiellement autonome.

4. Procédé selon l'une quelconque des revendications précédentes, **caractérisé en ce qu'**un niveau de remplissage dans ce module de processus (2) est détecté pour détecter la quantité de matériau à traiter par ce module de processus (2), respectivement présente dans au moins l'un des modules de processus (2).

5. Procédé selon l'une quelconque des revendications précédentes, **caractérisé en ce qu'**une pression dans ce module de processus (2) est détectée pour détecter la quantité de matériau à traiter par ce module de processus (2), respectivement présente dans au moins l'un des modules de processus (2).

6. Installation de production (1) pour la production d'un produit chimique et/ou pharmaceutique, présentant au moins deux modules de processus (2) autonomes en termes de technique régulation, pouvant être reliés les uns aux autres en termes de technique de production, chaque module de processus (2) présentant un dispositif électronique (3), en particulier un dispositif de commande et/ou de régulation, qui est prévu pour détecter en continu ou séparément une quantité de matériau respectivement présente dans le module de processus (2) respectif, à traiter par ce module de processus (2), et pour la comparer à une valeur seuil de quantité prédéfinie, chaque dispositif électronique (3) étant de plus prévu pour
- actionner une amenée du module de processus (2) respectif pour augmenter un apport de masse dans ce module de processus (2) lorsque la quantité de matériau respectivement présente dans ce module de processus (2), à traiter par ce module de processus (2), est inférieure à la valeur seuil de quantité, l'amenée étant en même temps une évacuation d'un autre module de processus (2), placé immédiatement en amont de ce module de processus (2) en termes de technique de production, de sorte que tous les modules de processus (2) de l'installation de production (1) fonctionnent de manière homogène selon le principe pull, ou
- pour actionner une évacuation du module de processus (2) respectif pour augmenter une évacuation de masse de ce module de processus (2) lorsque la quantité de matériau respectivement présente dans ce module de processus (2), à traiter par ce module de processus (2), est supérieure à la valeur seuil de quantité, l'évacuation étant en même temps une amenée d'un autre module de processus (2), placé immédiatement en aval de ce module de processus (2) en termes de technique de production, de sorte que tous les modules de processus (2) de l'installation de production (1) fonctionnent de manière homogène selon le principe push.

7. Installation de production (1) selon la revendication 6, **caractérisée en ce qu'**au moins un module de processus (2) présente au moins un capteur de niveau de remplissage (6) détectant le niveau de remplissage de matériau dans ce module de processus (2), relié en termes de technique de communication au dispositif électronique (3) de ce module de processus (2), le dispositif électronique (3) étant prévu pour déterminer, à partir du niveau de remplissage de matériau respectivement détecté par l'intermédiaire du capteur de niveau de remplissage (6), la quantité de matériau respectivement présente dans le module de processus (2), à traiter par le module de processus (2) .

8. Installation de production (1) selon la revendication 6 ou 7, **caractérisée en ce qu'**au moins un module de processus (2) présente au moins un capteur de pression détectant la pression dans ce module de processus (2), relié en termes de technique de communication au dispositif électronique (3) de ce module de processus (2), le dispositif électronique (3) étant prévu pour déterminer, à partir de la pression respectivement détectée par l'intermédiaire du capteur de pression, la quantité de matériau respectivement présente dans le module de processus (2), à traiter par le module de processus (2).

9. Installation de production (1) selon l'une quelconque des revendications 6 à 8, **caractérisée en ce qu'**au moins une soupape (6) à commande électrique, reliée en termes de technique de communication au dispositif électronique (3) du module de processus (2) placé en amont ou du module de processus (2) placé en aval, est disposée au niveau de chaque conduite (4) formant une évacuation pour un module de processus (2) placé en amont et en même temps une amenée pour un module de processus (2) placé en aval de ce module de processus (2).
